(19) Europäisches Patentamt
European Patent Office
Office européen des brevets

(11) EP 4 560 537 A1

(12) EUROPEAN PATENT APPLICATION

(43) Date of publication:
28.05.2025 Bulletin 2025/22

(21) Application number: 24210718.3

(22) Date of filing: 05.11.2024

(51) International Patent Classification (IPC):
$G06N\ 3/084$ (2023.01)   $G06N\ 3/096$ (2023.01)

(52) Cooperative Patent Classification (CPC):
G06N 3/045; G06N 3/084; G06N 3/096

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 24.11.2023 GB 202317986

(71) Applicants:
• Continental Autonomous Mobility Germany GmbH
85057 Ingolstadt (DE)

• Nanyang Technological University
Singapore 639798 (SG)

(72) Inventors:
• SHI, Haosen
639798 Singapore (SG)
• ZHANG, Tianwei
639798 Singapore (SG)
• REN, Shen
339780 Singapore (SG)

(74) Representative: KASTEL Patentanwälte PartG mbB
St.-Cajetan-Straße 41
81669 München (DE)

(54) COMPUTER-IMPLEMENTED METHOD FOR TRAINING A MULTI-TASK NEURAL NETWORK

(57) A computer-implemented method for training a multi-task neural network for predicting a plurality of $T$ tasks, $T \geq 2$, simultaneously based on input data, the method comprising: a) providing a multi-task neural network, a training dataset D for training the neural network on the plurality of $T$ tasks, and a validation dataset $\mathcal{D}'$ for validating the neural network on the plurality of $T$ tasks; and b) training the multi-task neural network for the plurality of $T$ tasks across a predefined number $N_{epoch}$ of training epochs by using the training dataset $D$ and the validation dataset $D'$ such that a combined loss function is minimized within the predefined number $N_{epoch}$ of training epochs.

EP 4 560 537 A1

Fig. 1

**Description**

TECHNICAL FIELD

The invention relates to a computer-implemented method for training a multi-task neural network. The invention further relates to a computing and/or controlling device, a computer program, and a computer-readable storage medium.

BACKGROUND

A deep neural network model which has a suitable architecture and is trained by multitask learning algorithms can perform multiple tasks at the same time. Most recent works have investigated these two components from different perspectives and designed many deep neural network architectures and multitask training algorithms in a lot of domains.
However, in general, multitask neural networks are difficult to train. The core difficulty of the multi-task learning problem is that different tasks require capturing different levels of information and then to exploit them to varying degrees. However, due to the black box nature of deep neural networks, it may be hard to know what features or information the model must extract from the input data for each task and how the model learns such feature extraction process.

SUMMARY OF THE INVENTION

The object of the invention is to provide an improved method for training a multi-task neural network.
The object of the invention is achieved by the subject-matter of the independent claims. Advantageous embodiments of the invention are subject-matter of the dependent claims.
In one aspect, the invention provides a computer-implemented method for training a multi-task neural network for predicting a plurality of $T$ tasks, $T \geq 2$, simultaneously based on input data, the method comprising:

a) providing a multi-task neural network, a training dataset $\mathcal{D}$ for training the neural network on the plurality of $T$ tasks, and a validation dataset $\mathcal{D}'$ for validating the neural network on the plurality of T tasks; and
b) training the multi-task neural network for the plurality of T tasks across a predefined number $N_{\text{epoch}}$ of training epochs by using the training dataset $\mathcal{D}$ and the validation dataset $\mathcal{D}'$ such that a combined loss function is minimized within the predefined number $N_{\text{epoch}}$ of training epochs, wherein the combined loss function for a respective training epoch depends on:

- a sum of a plurality of single-task loss values for the respective training epoch and respectively from a single-task loss function $L_t$ for a corresponding task $t$ = 1, ..., T, and
- a regularization value for the respective training epoch and from a regularization function for all pairs of tasks $t_1, t_2$ = 1, ..., T, the regularization function for a respective pair of tasks $t_1, t_2$ = 1, ..., T being based on a difference between a corresponding pair of distance metric values respectively from a distance metric function d, each respective distance metric value for the corresponding task $t$ = 1, ..., T being calculated in the respective training epoch by evaluating the distance metric function d on a corresponding single-task control parameter $\theta'_t$ predicted in said training epoch, the corresponding single-task control parameter $\theta'_t$ being predicted in said training epoch by an optimization neural network $\text{Optim}_\phi$ that is meta-trained in said training epoch in relation to said task.

An advantage of the method may be that it can be used for training any neural network, e.g., a multilayer perceptron, a convolutional neural network, a deep neural network, for predicting a plurality of $T$ tasks, $T \geq 2$, simultaneously.
The training dataset and the validation dataset used to meta-train the neural network may be both split from an original dataset. Thus, in the precent case, the term "validation dataset" may be different from the widely-used term in deep learning which is only used for evaluating the performance or finding the hyperparameters.
A further advantage of the method may be that it can align or balance the training speed of the plurality of T tasks having different levels of a learning complexity. Furthermore, the method may improve training of the multi-task neural network such that an averaged prediction accuracy across several or all T tasks and/or selected prediction accuracies for predicting one or more selected tasks are maximized. Additionally, or alternatively, the method may further improve training of the multi-task neural network such that selected prediction accuracies for predicting one or more selected tasks are similar in scale.
A further advantage of the method may be that it can decrease the size of the trained multi-task neural network.
Preferably, the respective single-task loss function $L_t$ for the corresponding task $t$ = 1, ..., T is validated in the respective training epoch on the corresponding single-task control parameter $\theta'_t$ predicted in said training epoch and on inputs of the validation dataset $\mathcal{D}'$ related to said task.

Preferably, c1) the optimization neural network Optim$_\phi$ includes the multi-task neural network that is trained across the predefined number $N_{\text{epoch}}$ of training epochs such that the combined loss function is minimized within the predefined number $N_{\text{epoch}}$ of training epochs.

An advantage of the method may be that the optimization neural network Optim$_\phi$ can be used for both, as the multi-task neural network itself and as the neural network for predicting the corresponding single-task control parameter $\theta'_t$. This may reduce the computation resources needed for training.

Preferably, c2) the optimization neural network Optim$_\phi$ is parameterized with an optimization parameter $\phi$ that is adapted in the respective training epoch based on the optimization parameter $\phi$ of the corresponding previous training epoch and a gradient descent of the combined loss function.

Parameterization of the optimization neural network Optim$_\phi$ similarly may have the advantage that the optimization neural network Optim$_\phi$ can be used for both, as the multi-task neural network itself and as the neural network for predicting the corresponding single-task control parameter $\theta'_t$.

Preferably, the optimization neural network Optim$_\phi$ is meta-trained in the respective training epoch for predicting the corresponding single-task control parameter $\theta'_t$ in said training epoch based on inputs of the training dataset $\mathcal{D}$ related to said task $t$ = 1, ..., T inputted to the optimization neural network Optim$_\phi$.

The training dataset $\mathcal{D}$ and the validation dataset $\mathcal{D}'$ may represent joint datasets, that are combined according to the different tasks to be learned. For example, the training dataset $\mathcal{D}$ and the validation dataset $\mathcal{D}'$ may be joint datasets with multiple labels $y_0$, ..., $y_T$ for learning an object detection task, a semantic segmentation task, and/or a depth estimation task. Thus, the training dataset $\mathcal{D}$ and the validation dataset $\mathcal{D}'$ may be adapted according to the needs and use case.

Preferably, the optimization neural network Optim$_\phi$ is trained for generating a multiple-task control parameter $\theta_i$ for the respective training epoch based on the multiple-task control parameter $\theta_{i-1}$ for the corresponding previous training epoch and/or inputs of the training dataset $\mathcal{D}$ related to each of the plurality of $T$ tasks inputted to the optimization neural network Optim$_\phi$.

The multiple-task control parameter $\theta_i$ may be used as a common measure over all $T$ tasks based on which the corresponding single-task control parameter $\theta'_t$ is predicted. The multiple-task control parameter $\theta_i$ may further be used as a common measure over all $T$ tasks based on which the distance metric function $d$ is evaluated. Thus, the role of multiple-task control parameter $\theta_i$ may be multifunctional which may reduce the computation resources needed for training. This may provide an improved method for simultaneous learning of the different tasks.

Preferably, the optimization neural network Optim$_\phi$ is meta-trained in the respective training epoch for predicting the corresponding single-task control parameter $\theta'_t$ in said training epoch based on the multiple-task control parameter $\theta_{i-1}$ of the corresponding previous training epoch inputted to the optimization neural network Optim$_\phi$.

Preferably, the respective distance metric value for the respective training epoch is calculated in said training epoch by evaluating the distance metric function d on the multiple-task control parameter $\theta_i$ for said training epoch.

Preferably, the optimization neural network Optim$_\phi$ is meta-trained for one or more meta-training steps in the respective training epoch and/or the optimization neural network Optim$_\phi$ is meta-trained in said training epoch for predicting the single-task control parameter $\theta'_t$ for the final training epoch.

An advantage of the method may be that is the optimization neural Optim$_\phi$ is trained for predicting the single-task control parameter $\theta'_t$ for the final training epoch. Thus, in each training epoch, the training of the different tasks is aligned in a perspective manner with respect to the final training epoch. This may improve the training of the multi-task neural network.

Preferably, the combined loss function and/or the single-task loss functions $L_t$ are based on one, several, or all of the following: a focal loss, a cross-entropy loss, and a bounding box regression loss.

Preferably, the distance metric function is based on one, several, or all of the following: a Kullback-Leibler (KL) divergence metric, a CKA distance metric, and an L2 distance metric.

Preferably, the regularization function is based on a norm function of the difference, the norm function being preferably an absolute value function.

Preferably, the method further comprises:

> d1) Storing the trained multi-task neural network for predicting the plurality of T tasks simultaneously in a controlling device for generating a control signal for controlling an apparatus;

d2) Inputting input data related to the apparatus to the trained multi-task neural network; and

d3) Generating, by the controlling device, the control signal for controlling the apparatus based on an output of the trained multi-task neural network.

The controlling device may be implemented any kind of apparatus, e.g., in an autonomous vehicle. The input data may thus relate to sensor data of said apparatus of autonomous vehicle. In an autonomous vehicle, the controlling device may generate control signals for navigating the vehicle. According to the method, the multi-task neural network may thus be trained for predicting one or more navigation tasks.

In another aspect, the invention provides a computing and/or controlling device comprising means adapted to execute the steps of the method according to any of the preceding embodiments.

In another aspect, the invention provides a computer program comprising instructions to cause a computing and/or controlling device to execute the steps of the method according to any of the preceding embodiments.

In another aspect, the invention provides a computer-readable storage medium having stored thereon the computer program.

Embodiments of the invention preferably have the following advantages and effects:

Preferred embodiments of the invention feature a novel method for understanding the stages of training for various tasks in multi-task learning, as well as a technique to align these stages for optimal joint performance.

The proposed methods may be individually packaged as a software module to be added to existing deep learning or deep multi-task training pipelines for model understandings and for enhanced joint performance. The technologies involved in preferred embodiments of the invention may also be widely applied to deep learning applications in the wild with distinctive training data distributions, such as multi-class, multi-modal, multi-label, and multi-domain learning.

The primary application of preferred embodiments of the invention is for deep multi-task model understandings and training dynamics optimization for perception tasks. Specifically, the technical problem that preferred embodiments of the invention is focused to solve is two-folds:

1. First, preferred embodiments of the invention can be used to understand the training progress of both, single-task and multi-task models, providing detailed insights into each layer of the neural network model. Preferred embodiments of the invention can be further applied to understand the challenging tasks/classes/data samples that are usually lower performed than other tasks. These understandings can be integrated with active learning or data resampling to improve the lower-performed tasks/classes in practical deep learning pipeline.

2. Second, preferred embodiments of the invention can be applied to align training stages during multi-task training using meta-learning to encourage that all tasks are jointly optimized to its best performance. Again, the method may also be directly applied to multi-class classification or object detection that is widely seen in automated and autonomous driving applications. This is particularly useful when there are challenging tasks/scenes involved in the applied scenarios that can are difficult to optimize to its best performance using traditional deep learning training methods.

The key technical innovations that set preferred embodiments of the invention apart from and offer advantages over prior art include:

1. A method to understand the single-task or multi-task neural network training progress, with detailed insights into each layer of the neural network model.

2. A method or system for training a multi-task neural network model effectively using meta-learning to learn a regularization loss, combined with the original multi-task loss function, to align the training progress of all tasks learned simultaneously for better joint performance. The multi-task neural network is preferably characterized as a single neural network, where the outputs consist of multiple task prediction results. It is trained using a combined loss function for each task.

To achieve above idea, preferred embodiments of the invention provide a metric to define and measure the training stage of each task and a meta-learning based optimization algorithm to implement a training process which keep aligned training stages for all tasks.

BRIEF DESCRIPTION OF THE DRAWINGS

Embodiments of the invention are now explained in more detail with reference to the accompanying drawings of which

Fig. 1 shows a comparison of different schemes for training a neural network;

Fig. 2 shows an embodiment of a first computer-implemented method;

Fig. 3 shows a diagram of results of the method according to Fig. 2;

Fig. 4 shows a first embodiment of a computer-implemented method for training a multi-task neural network; and

Fig. 5 shows a second embodiment of the computer-implemented method for training the multi-task neural network.

DETAILED DESCRIPTION OF THE DRAWINGS

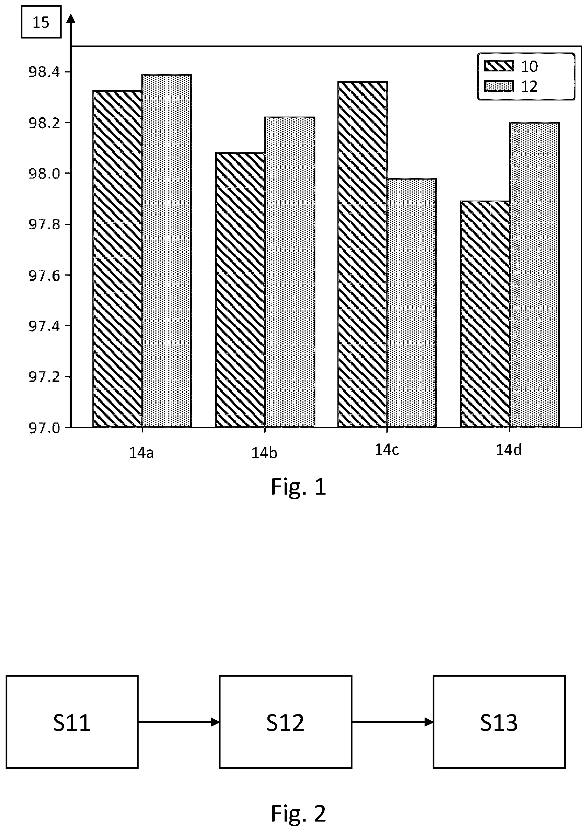

Fig. 1 shows a comparison of different schemes for training a neural network for predicting a first task 10 and/or a second task 12 in a first case 14a, a second case 14b, a third case 14c, and a fourth case 14d.

The first case 14a from the left indicates prediction accuracies 15 of a single-task neural network for predicting the first task 10 or the second task 12, respectively. The neural network is trained for either the first task 10 or the second task 12, respectively.

The second case 14b indicates the prediction accuracies of a multi-task neural network for predicting the first task 10 and the second task 12 simultaneously. The multi-task neural network is trained simultaneously for both, the first task 10 and the second task 12, according to known methods.

The third case 14c indicates prediction accuracies of the multi-task neural network for predicting the first task 10 and the second task 12 simultaneously. In contrast to the second case 14c, the multi-task neural network is trained successively for both tasks 10, 12, starting with the first task 10.

The fourth case 14d indicates prediction accuracies of the multi-task neural for predicting the first task 10 and the second task 12 simultaneously. In contrast to the third case 14c, the multi-task neural network is trained starting with the second task 12.

As can be derived from Fig. 1, the different schemes yield different prediction accuracies for predicting the first task 10 and the second task 12, respectively. Additionally, the different schemes yield a different averaged prediction accuracy for both tasks 10, 12.

An idea of preferred embodiments of the invention is to provide an optimized scheme for training a multi-task neural network such that the prediction accuracies for predicting the first task 10 or the second task 12, respectively, are preferably similar in scale. Furthermore, the averaged prediction accuracy for both tasks 10, 12 should be maximized. To achieve this object, a further idea of preferred embodiments of the invention is to align a training speed of different tasks in a multi-task neural network.

Fig. 2 shows an embodiment of a first computer-implemented method. An example of a pseudo-code A of the method according to Fig. 2 may read as follows:

```
Require: training dataset 𝒟, parameter θ₀, number of total
        layers  N_layer
        for  i = 1,2, … , N_epoch  do
            for  x, y ~ 𝒟  do
                θᵢ ← θᵢ₋₁ + α∇_θ L(M_θ(x), y)
            end for
        for  i = 1,2, … , N_epoch  do
            for  j = 1,2, … , N_layer  do
                M_front = M_θᵢ[∶ j]
                M_back = M_θ_{N_epoch}[j + 1 ∶ ]
                Record  L(M_back ∘ M_front(x), y)
            end for
        end for
```

In a step S11, a single-task neural network $M_\theta$ for predicting a single task and a training dataset $D$ for training the neural network $M_\theta$ on the task are provided. The single-task neural network $M_\theta$ is parameterized with a model parameter $\theta$ that is initialized with $\theta_0$. The neural network $M_\theta$ further includes a plurality of $N_{layer}$ network layers.

In a step S12, the neural network $M_\theta$ is trained by using the training dataset $D$ such that a loss function L is minimized within a predefined number $N_{epoch}$ of training epochs. In a respective training epoch $i = 1, ... , N_{epoch}$, the model parameter $\theta_i$ is adapted or updated based on the model parameter $\theta_{i-1}$ of the previous corresponding training epoch and a gradient descent of the loss function $L$. In this way, for each training epoch $i = 1, ...,N_{epoch}$, the neural network $M_{\theta_i}$ is calculated. Additionally, the model parameter $\theta_{N_{epoch}}$ for the final training epoch may be predicted.

In a step S13, for each training epoch $i = 1, ... , N_{epoch}$ and for each network layer $j = 1, ... , N_{layer}$, the loss function $L$ of a joint neural network is recorded.

The joint neural network is merged by a front model $M_{front}$ and a back model $M_{back}$. Therefore, the neural network $M_{\theta_i}$ for the respective training epoch $i = 1, ..., N_{epoch}$ is clipped at a clipping layer of the neural network $M_{\theta_i}$ at a clipping position $N_{clipping} = [1, ... , N_{layer} - 1]$.

The front model $M_{front}$ for a respective training epoch $i = 1, ...,N_{epoch}$ and for a respective network layer $j = 1, ..., N_{layer}$ represents then the neural network $M_{\theta_i}$ for said training epoch $i = 1, ..., N_{epoch}$ from the first network layer until and including the network layer at the clipping position $N_{clipping} = [1, ..., N_{layer} - 1]$.

The back model $M_{back}$ for a respective network layer j = 1, ..., $N_{layer}$ represents the neural network $M_{\theta_{N_{epoch}}}$ for the final training epoch from the network layer after the clipping position $N_{clipping} = [1, ... , N_{layer} - 1]$ until the last network layer.

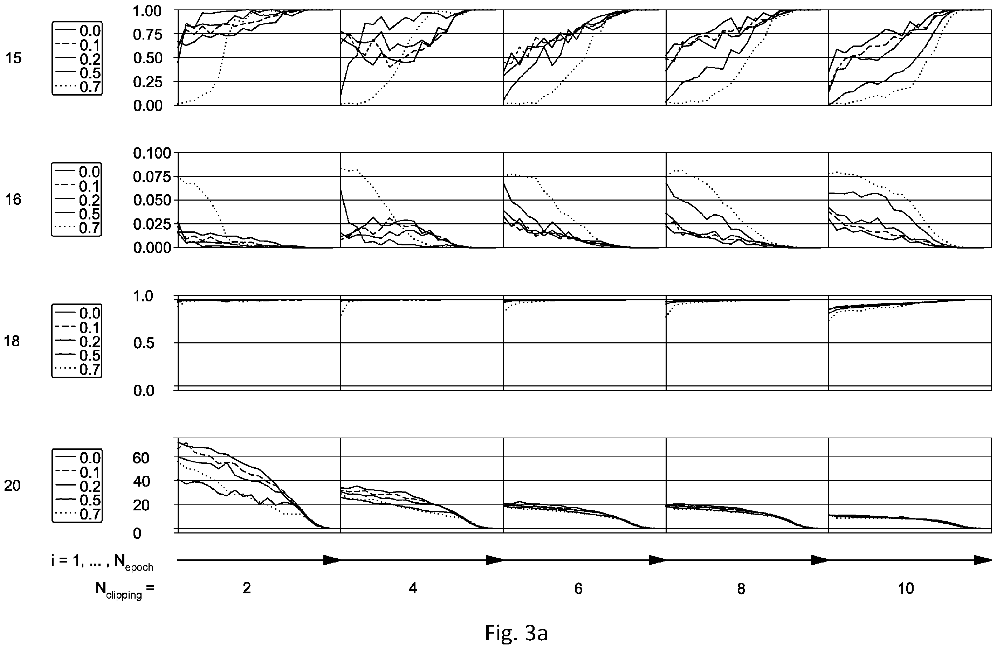

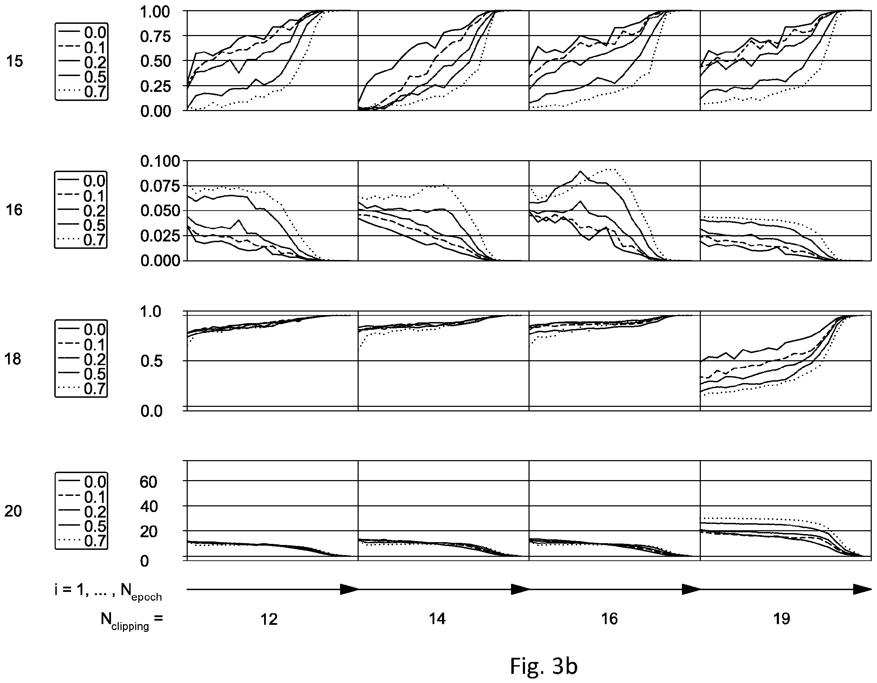

Fig. 3 shows a diagram of results of the method according to Fig. 2 for a plurality of joint neural networks for predicting a single task, each joint neural network having $N_{layer} = 19$ network layers. In this case, the joint neural networks include each a VGG19 network with 16 convolution layers and three fully connected layers, respectively.

The joint neural networks have been each trained with a differently modified CIFAR100 training datasets $\mathcal{D}$. The CIFAR100 training dataset have been modified by adding different levels of noise thereto, which simulates different levels of a learning complexity of the task.

The first line of the diagram of Fig. 3 shows the prediction accuracy 15 for the plurality of joint neural networks with respect to the training epochs $i = 1, ... , N_{epoch}$, wherein the joint neural networks differ in the position of the joint, i.e., the clipping position $N_{clipping}$.

The second, third, and fourth line of the diagram of Fig. 3 respectively relate to a distance metric value with respect to the training epochs $i = 1, ... , N_{epoch}$. The distance metric value is calculated by evaluating, respectively, a Kullback-Leibler (KL) divergence metric 16, a CKA distance metric 18 (see, e.g., Stephen Boyd and Lieven Vandenberghe; Convex optimization; Cambridge university press, 2004), and an L2 distance metric 20 on the model parameter $\theta_i$

for the respective training epoch and the model parameter $\theta_{N_{\text{epoch}}}$ of the final training epoch.

As can be derived from Fig. 3, the distance metric values show a behavior with respect to the different levels of the learning complexity of the task and with respective to the training epochs $i = 1, ..., N_{\text{epoch}}$ that is similar to the prediction accuracy 15. This finding motivates the use of a distance metric function d for aligning the training speed of different tasks in a multi-task neural network.

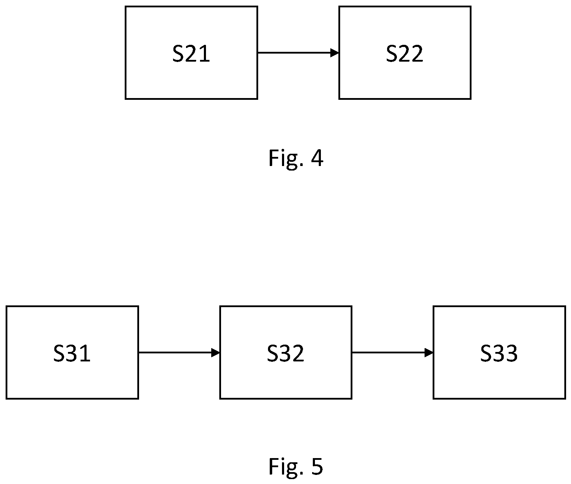

Fig. 4 shows a first embodiment of a computer-implemented method for training a multi-task neural network for predicting a plurality of $T$ tasks, $T \geq 2$, simultaneously based on input data. An example of a pseudo-code B of the method according to Fig. 4 may read as follows:

```
Require: training dataset 𝒟, validation dataset 𝒟',
         initialized parameter θ₀, training stage distance metric d,
         parameterized optimization process Optim with its parameter
         ϕ
```

$$\text{for } i = 1,2, ..., N_{\text{epoch}} \text{ do}$$

$$\quad \text{for } x, y_0, ..., y_T \sim \mathcal{D} \text{ do}$$

$$\quad\quad \text{for } j = 1,2, ..., T \text{ do}$$

$$\quad\quad\quad \theta_j' \leftarrow \theta_{i-1}$$

$$\quad\quad\quad\quad \text{for } k = i, ..., N_{\text{epoch}} \text{ do}$$

$$\quad\quad\quad\quad\quad \text{for } x, y_j \sim \mathcal{D} \text{ do}$$

$$\quad\quad\quad\quad\quad\quad \theta_j' \leftarrow \text{Optim}_\phi(\theta_j', x, y_j)$$

$$\quad\quad\quad\quad\quad \text{end for}$$

$$\quad\quad\quad\quad \text{end for}$$

$$\quad\quad\quad \text{end for}$$

$$\quad\quad \mathcal{R} \leftarrow \sum_{t_1=1}^T \sum_{t_2=1}^T \left\| d\left(\theta_{i-1}, \theta_{t_1}'\right) - d\left(\theta_{i-1}, \theta_{t_2}'\right) \right\|$$

$$\quad\quad \mathcal{L} \leftarrow \frac{1}{T} \sum_{t=1}^T \sum_{x', y_t' \sim \mathcal{D}'}^{\square} \frac{1}{|\mathcal{D}'|} L_t(\theta_t', x', y_t')$$

$$\quad\quad \phi \leftarrow \phi - \alpha \nabla_\phi(\mathcal{L} + \mathcal{R})$$

$$\quad\quad \theta_i \leftarrow \text{Optim}_\phi(\theta_{i-1}, x, y_0, ..., y_T)$$

$$\quad \text{end for}$$

$$\text{end for}$$

In a step S21, the first embodiment includes:

Providing a multi-task neural network, a training dataset $\mathcal{D}$ for training the neural network on the plurality of $T$ tasks, and a validation dataset $\mathcal{D}'$ for validating the neural network on the plurality of $T$ tasks.

The training dataset $\mathcal{D}$ and the validation dataset $\mathcal{D}'$ represent jointly labelled datasets, where each data (e.g., picture) has multiple labels $y_0, ..., y_T$ corresponding to the labels of all $T$ tasks. The multiple labels $y_0, ..., y_T$ may be used for training different tasks (e.g., object detection, semantic segmentation, depth estimation, etc.).

In a step S22, the first embodiment includes:

Training the multi-task neural network for the plurality of $T$ tasks by using the training dataset $\mathcal{D}$ and the validation dataset $\mathcal{D}'$ such that a combined loss function is minimized within a predefined number $N_{\text{epoch}}$ of training epochs.

The combined loss function for a respective training epoch depends on a sum of a plurality of single-task loss values for the respective training epoch and respectively from a single-task loss function $L_t$ for a corresponding task $t = 1, ... , T$.

The respective single-task loss function $L_t$ for the corresponding task $t = 1, ..., T$ is validated on a corresponding single-task control parameter $\theta'_t$ predicted in said training epoch and inputs of the validation dataset $\mathcal{D}'$ related to said task. The corresponding single-task control parameter $\theta'_t$ is predicted in the respective training epoch by an optimization neural network Optim$_\phi$ that is meta-trained in said training epoch in relation to the corresponding task $t_1, t_2 = 1, ... , T$.

The optimization neural network Optim$_\phi$ may be meta-trained for one or more meta-training steps in the respective training epoch. The number of meta-training steps in the respective training epoch may be variable and/or depending on the number of training epochs that are remaining from said training epoch until the $N_{epoch}$-th training epoch is reached. In other words, the optimization neural network Optim$_\phi$ may be meta-trained for predicting the single-task control parameter $\theta'_t$ for the final training epoch.

The combined loss function for the respective training epoch further depends on a regularization value for the respective training epoch and from a regularization function for all pairs of tasks $t_1, t_2 = 1, ... , T$.

The regularization function for a respective pair of tasks $t_1, t_2 = 1, ... , T$ is based on a difference between a corresponding pair of distance metric values respectively from a distance metric function $d$.

Each respective distance metric value for the respective training epoch is calculated in said training epoch by evaluating the distance metric function $d$ on the corresponding single-task control parameter $\theta'_t$ predicted in said training epoch.

The combined loss function and/or the single-task loss functions $L_t$ may be based on one, several, or all of the following: a focal loss, a cross-entropy loss, and a bounding box regression loss.

The distance metric function d may be based on one, several, or all of the following: the Kullback-Leibler (KL) divergence metric 16, the CKA distance metric 18, and the L2 distance metric 20.

The regularization function may be based on a norm function of the difference, the norm function being preferably an absolute value function.

Reference is now made to the pseudo-code B:

In this case, the optimization neural network Optim$_\phi$ includes the multi-task neural network that is trained across the predefined number $N_{epoch}$ of training epochs such that the combined loss function is minimized within the predefined number $N_{epoch}$ of training epochs.

In other words, the optimization neural network Optim$_\phi$ is parameterized with an optimization parameter $\phi$. The optimization parameter $\phi$ is adapted or updated in the respective training epoch based on the optimization parameter $\phi$ of the corresponding previous training epoch and a gradient descent of the combined loss function.

Furthermore, the optimization neural network Optim$_\phi$ is meta-trained in the respective training epoch for predicting the corresponding single-task control parameter $\theta'_t$ in said training epoch based on inputs of the training dataset $D$ related to said task $t = 1, ..., T$ inputted to the optimization neural network Optim$_\phi$.

Furthermore, the optimization neural network Optim$_\phi$ is trained for generating a multiple-task control parameter $\theta_i, i = 1, ... , N_{epoch}$, for the respective training epoch based on the multiple-task control parameter $\theta_{i-1}$ for the corresponding previous training epoch and/or inputs of the training dataset $\mathcal{D}$ related to each of the plurality of $T$ tasks inputted to the optimization neural network Optim$_\phi$.

Furthermore, the optimization neural network Optim$_\phi$ is meta-trained in the respective training epoch for predicting the corresponding single-task control parameter $\theta'_t$ in said training epoch based on the multiple-task control parameter $\theta_{i-1}$ of the corresponding previous training epoch inputted to the optimization neural network Optim$_\phi$.

Furthermore, the respective distance metric value for the respective training epoch is calculated in said training epoch by evaluating the distance metric function $d$ on the multiple-task control parameter $\theta_i$ for said training epoch.

Furthermore, the regularization function is based on the absolute value function.

Fig. 5 shows a second embodiment of the computer-implemented method for training the multi-task neural network. The second embodiment includes the steps of the first embodiment according to Fig. 4 (which are not shown).

In a step S31, the second embodiment includes:

Storing the trained multi-task neural network for predicting the plurality of $T$ tasks simultaneously in a controlling device for generating a control signal for controlling an apparatus.

In a step S32, the second embodiment includes:

Inputting input data related to the apparatus to the trained multi-task neural network.

In a step S33, the second embodiment includes:

Generating, by the controlling device, the control signal for controlling the apparatus based on an output of the trained multi-task neural network.

Preferred embodiments of the invention may be summarized as follows:
Preferably, we first consider how to define and describe the training stage in a single task training process. Here we may use a backward perspective to define the training stage, i.e., we want to know whether a certain model in the training process is close enough to the final training model that we think is good enough.

To describe the training stage more detailed, we preferably consider the features generated by each layer of the model. Recall that deep neural networks may show obvious hierarchical characteristics, which enables us to divide neural networks into two models according to any layer. This hierarchical approach to feature processing may still exist even when skip connections are considered.

Preferably, we use the term front-model to refer to the first half of the model separated from a layer, and back-model to refer to the second half. The front-model may be a mapping function from the input space to the hidden space, and the back-model may be a function from the hidden space into the label space. An idea is that if a front-model has acquired an enough strong feature extraction ability, there may be a very little performance gap compared with the final trained model when both using the back-model from the final model. It should be emphasized that this concept may primarily apply to the backward perspective, where the ultimate model is the outcome of training derived from the evaluated model. In instances where other parameter initializations or alternative training algorithms are employed, the final back-model may require an equivalent representation of the feature and cause a significant performance drop.

We provide our algorithm in pseudo-code A and results are shown in Fig. 3 on noisy CIFAR100 datasets.

Preferably, the noisy CIFAR100 datasets are constructed from the original CIFAR100 datasets, but we preferably replace some correct labels from training data to complete random noise. Fig. 3 shows the corresponding back-model's accuracy and the KL divergence, CKA distance, and L2 distance between features of the training models and the final model for each layer. The x-axis consists of multiple whole training processes for each VGG19 block.

As shown in Fig. 3, we compared our method with several commonly used feature similarity calculation methods, like L2 distance between features and CKA. Compared with other methods, our method presents more information and verifies the conclusions of many previous papers. For example, shallow neural networks are more inclined to learn simple features, shallow neural networks have a faster learning speed than deep ones, and neural networks tend to learn simple features that are easier to generalize at the beginning of the learning process and begin to memorize the noise in the data set at the later stage. We think, this method can show the training stage in more aspects and provide more information so that we hope to build on this method for designing a multi-task learning algorithm which tries to align training stage between different tasks.

In the case of multi-tasking, it may be hard to directly transfer the back-model from the single-task training to compare the training stages of all tasks, because the output of the back-model may be fundamentally different in different tasks. From the perspective of the data, the output may be in a different label space. From the perspective of the model, they may use separate task headers. Here, we suggest to use preferably the distance between features generated by the shared backbone. The back-model is regarded as the second half-part of the shared backbone, not including the task specific head. And extra training on each task may be needed, which starts from the evaluated multitask model in every training step until getting enough good single task models which are used as back-models. Then we can follow the above process to obtain the descriptions of all tasks for a multitask learning model.

Preferred embodiments of the invention provide a meta-learning approach to keep an aligned training stage during multitask training process. We first preferably use the difference between tasks' training stages to design a penalty term, e.g., the absolute value of the difference in distances for all layers and all tasks. However, since the calculation of the training stage may depend on the training algorithm, and our goal is to find a better multitask training algorithm, this may be a cyclic dependence problem.

We preferably use a meta-learning perspective, that is, we preferably use a meta-learning process to learn a neural network optimization process so that the training stage is aligned throughout the process. We preferably model this optimization process as a deep neural network as $Optim_\phi$, and then we may train this optimization process with two major objectives: 1) this optimization process may minimize the original loss value for all tasks in a standard training time. 2) the penalty term is small. According to these two requirements, we provide our meta-learning algorithm in pseudo-code B.

In the actual implementation, we preferably use the neural network as a loss function and combine with standard gradient descent algorithm to form the whole optimization process, i.e., $Optim_\phi(\theta,x,y) = \theta - \alpha \nabla L_\phi(f(\theta(x),y)$. And we preferably do not actually train the single task network until optimal (getting the best $\theta'_j$), but instead use the model after multi-step stochastic gradient descent to greatly reduce computation.

The invention also provides a computing and/or controlling device comprising means adapted to execute the steps of the described method for training a multi-task neural network for predicting a plurality of $T$ tasks, $T \geq 2$, simultaneously based on input data. The invention further provides a computer program comprising instructions to cause the computing and/or controlling device to execute the steps of the described method. The invention further provides a computer-readable storage medium having stored thereon the computer program.

REFERENCE SIGNS

10 first task

12 second task

14a first case

14b second case

14c third case

14d fourth case

15 prediction accuracy

16 Kullback-Leibler (KL) divergence metric

18 CKA distance metric

20 L2 distance metric

d distance metric function

$\mathcal{D}$ training dataset

$\mathcal{D}'$ validation dataset

L loss function

$L_t$ single-task loss function

$M_\theta$ single-task neural network

$M_{\text{front}}$ front model

$M_{\text{back}}$ back model

$N_{\text{clipping}}$ clipping position

$N_{\text{epoch}}$ number of training epochs

$N_{\text{layer}}$ number of network layers

$\text{Optim}_\phi$ optimization neural network

T number of tasks

$\theta$ model parameter

$\theta_i$ model parameter/multiple-task control parameter of $i$-th training epoch

$\theta'_t$ single-task control parameter of t-th task

$\phi$ optimization parameter

**Claims**

1. A computer-implemented method for training a multi-task neural network for predicting a plurality of $T$ tasks, $T \geq 2$, simultaneously based on input data, the method comprising:

    a) providing a multi-task neural network, a training dataset $\mathcal{D}$ for training the neural network on the plurality of $T$ tasks, and a validation dataset $D'$ for validating the neural network on the plurality of $T$ tasks; and
    b) training the multi-task neural network for the plurality of $T$ tasks across a predefined number $N_{\mathrm{epoch}}$ of training epochs by using the training dataset $\mathcal{D}$ and the validation dataset $\mathcal{D}'$ such that a combined loss function is minimized within the predefined number $N_{\mathrm{epoch}}$ of training epochs, wherein the combined loss function for a respective training epoch depends on:

    - a sum of a plurality of single-task loss values for the respective training epoch and respectively from a single-task loss function $L_t$ for a corresponding task $t$ = 1, ... , $T$, and
    - a regularization value for the respective training epoch and from a regularization function for all pairs of tasks $t_1$, $t_2$ = 1, ... , $T$, the regularization function for a respective pair of tasks $t_1$, $t_2$ = 1, ..., T being based on a difference between a corresponding pair of distance metric values respectively from a distance metric function $d$, each respective distance metric value for the corresponding task $t$ = 1, ..., $T$ being calculated in the respective training epoch by evaluating the distance metric function d on a corresponding single-task control parameter $\theta'_t$ predicted in said training epoch, the corresponding single-task control parameter $\theta'_t$ being predicted in said training epoch by an optimization neural network $\mathrm{Optim}_\phi$ that is meta-trained in said training epoch in relation to said task.

2. The method according to claim 1, **characterized in that** the respective single-task loss function $L_t$ for the corresponding task $t$ = 1, ..., T is validated in the respective training epoch on the corresponding single-task control parameter $\theta'_t$ predicted in said training epoch and on inputs of the validation dataset $\mathcal{D}'$ related to said task.

3. The method according to any of the preceding claims, **characterized in that**:

    c1) the optimization neural network $\mathrm{Optim}_\phi$ includes the multi-task neural network that is trained across the predefined number $N_{\mathrm{epoch}}$ of training epochs such that the combined loss function is minimized within the predefined number $N_{\mathrm{epoch}}$ of training epochs; and/or
    c2) the optimization neural network $\mathrm{Optim}_\phi$ is parameterized with an optimization parameter $\phi$ that is adapted in the respective training epoch based on the optimization parameter $\phi$ of the corresponding previous training epoch and a gradient descent of the combined loss function.

4. The method according to any of the preceding claims, **characterized in that** the optimization neural network $\mathrm{Optim}_\phi$ is meta-trained in the respective training epoch for predicting the corresponding single-task control parameter $\theta'_t$ in said training epoch based on inputs of the training dataset $\mathcal{D}$ related to said task $t$ = 1, ..., $T$ inputted to the optimization neural network $\mathrm{Optim}_\phi$.

5. The method according to any of the preceding claims, **characterized in that** the optimization neural network $\mathrm{Optim}_\phi$ is trained for generating a multiple-task control parameter $\theta_i$ for the respective training epoch based on the multiple-task control parameter $\theta_{i-1}$ for the corresponding previous training epoch and/or inputs of the training dataset $D$ related to each of the plurality of $T$ tasks inputted to the optimization neural network $\mathrm{Optim}_\phi$.

6. The method according to claim 5, **characterized in that** the optimization neural network $\mathrm{Optim}_\phi$ is meta-trained in the respective training epoch for predicting the corresponding single-task control parameter $\theta'_t$ in said training epoch based on the multiple-task control parameter $\theta_{i-1}$ of the corresponding previous training epoch inputted to the optimization neural network $\mathrm{Optim}_\phi$.

7. The method according to claim 6, **characterized in that** the respective distance metric value for the respective training epoch is calculated in said training epoch by evaluating the distance metric function d on the multiple-task control parameter $\theta_i$ for said training epoch.

8. The method according to any of the preceding claims, **characterized in that** the optimization neural network Optim$_\phi$ is meta-trained for one or more meta-training steps in the respective training epoch and/or the optimization neural network Optim$_\phi$ is meta-trained in said training epoch for predicting the single-task control parameter $\theta'_t$ for the final training epoch.

9. The method according to any of the preceding claims, **characterized in that** the combined loss function and/or the single-task loss functions $L_t$ are based on one, several, or all of the following: a focal loss, a cross-entropy loss, and a bounding box regression loss.

10. The method according to any of the preceding claims, **characterized in that** the distance metric function is based on one, several, or all of the following: a Kullback-Leibler (KL) divergence metric, a CKA distance metric, and an L2 distance metric.

11. The method according to any of the preceding claims, **characterized in that** the regularization function is based on a norm function of the difference, the norm function being preferably an absolute value function.

12. The method according to any of the preceding claims, further comprising:

d1) Storing the trained multi-task neural network for predicting the plurality of T tasks simultaneously in a controlling device for generating a control signal for controlling an apparatus;
d2) Inputting input data related to the apparatus to the trained multi-task neural network; and
d3) Generating, by the controlling device, the control signal for controlling the apparatus based on an output of the trained multi-task neural network.

13. A computing and/or controlling device comprising means adapted to execute the steps of the method according to any of the preceding claims.

14. A computer program comprising instructions to cause a computing and/or controlling device to execute the steps of the method according to any of the claims 1 to 12.

15. A computer-readable storage medium having stored thereon the computer program of claim 14.

Fig. 1

Fig. 2

Fig. 3a

Fig. 3b

```
┌──────────┐        ┌──────────┐
│          │        │          │
│   S21    │───────▶│   S22    │
│          │        │          │
└──────────┘        └──────────┘
```

Fig. 4

```
┌──────────┐     ┌──────────┐     ┌──────────┐
│          │     │          │     │          │
│   S31    │────▶│   S32    │────▶│   S33    │
│          │     │          │     │          │
└──────────┘     └──────────┘     └──────────┘
```

Fig. 5

Europäisches
Patentamt

European
Patent Office

Office européen
des brevets

# EUROPEAN SEARCH REPORT

**Application Number**

EP 24 21 0718

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/130275 A1 (CHEN ZHAO [US] ET AL) 2 May 2019 (2019-05-02) * paragraphs [0007] - [0035] * | 1-15 | INV. G06N3/084 G06N3/096 |
| A | US 11 527 074 B1 (REN SHEN [SG] ET AL) 13 December 2022 (2022-12-13) * columns 2-5 * | 1-15 | |
| A | SHI HAOSEN ET AL: "Deep Multitask Learning with Progressive Parameter Sharing", 2023 IEEE/CVF INTERNATIONAL CONFERENCE ON COMPUTER VISION (ICCV), IEEE, 2 October 2023 (2023-10-02), pages 19867-19878, XP034514346, DOI: 10.1109/ICCV51070.2023.01824 [retrieved on 2024-01-15] * the whole document * | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 19 March 2025 | Moran, Matthew |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 21 0718

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2025

| Patent document cited in search report | | Publication date | Patent family member(s) | | Publication date |
|---|---|---|---|---|---|
| US 2019130275 | A1 | 02-05-2019 | AU | 2018354257 A1 | 14-05-2020 |
| | | | CA | 3078530 A1 | 02-05-2019 |
| | | | CN | 111373419 A | 03-07-2020 |
| | | | EP | 3704592 A1 | 09-09-2020 |
| | | | IL | 273991 A | 31-05-2020 |
| | | | JP | 7181928 B2 | 01-12-2022 |
| | | | JP | 2021501391 A | 14-01-2021 |
| | | | KR | 20200078531 A | 01-07-2020 |
| | | | US | 2019130275 A1 | 02-05-2019 |
| | | | WO | 2019084189 A1 | 02-05-2019 |
| US 11527074 | B1 | 13-12-2022 | CN | 115796025 A | 14-03-2023 |
| | | | DE | 102022130893 A1 | 25-05-2023 |
| | | | US | 11527074 B1 | 13-12-2022 |

EPO FORM P0459

For more details about this annex : see Official Journal of the European Patent Office, No. 12/82